# EUROPÄISCHE PATENTANMELDUNG

(11) **EP 4 520 999 A1**
(43) Veröffentlichungstag der Anmeldung: **12.03.2025**
(21) Anmeldenummer: 24198409.5
(22) Anmeldetag: 04.09.2024
(51) Int. Cl.: F16H 57/025

(54) **AKTUATOR UND SYSTEM MIT EINEM AKTUATOR**

(30) Priorität: 05.09.2023 LU 505056
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft einen Aktuator, der einen Antriebsmotor und ein dem Antriebsmotor triebtechnisch nachgeschaltetes Getriebe aufweist. Der Aktuator zeichnet sich dadurch aus, dass er eine Drehmomentabstützkomponente aufweist, die sowohl das Drehmoment des Getriebes als auch das Drehmoment des Antriebsmotors abstützt, wobei die Drehmomentabstützkomponente wenigstens ein Befestigungselement aufweist, das dazu ausgebildet ist, die Drehmomentabstützkomponente schraubenlos an einer Komponente eines übergeordneten Systems, insbesondere an einer Roboterkomponente, zu befestigen

## Beschreibung

Die Erfindung betrifft einen Aktuator, der einen Antriebsmotor und ein dem Antriebsmotor triebtechnisch nachgeschaltetes Getriebe aufweist.

Die Erfindung betrifft außerdem ein System mit einem solchen Aktuator.

Aus DE 102 06 748 B4 ist ein Aktuator mit einem Untersetzungsgetriebe und einem Motor bekannt. Der Aktuator weist ein Gehäuse mit einem Flansch mit Durchgangsbohrungen zum Befestigen an einer Komponente eines übergeordneten Systems mittels Befestigungsschrauben auf.

Aus EP 3 336 384 A2 ist eine Getriebevorrichtung bekannt, die ein Spannungswellengetriebe beinhaltet. Das Spannungswellengetriebe beinhaltet einen Circularspline und einen Flexspline, sowie ein das Spannungswellengetriebe an dem Circularspline haltendes Halteelement. Die Getriebevorrichtung zeichnet sich dadurch aus, dass das Halteelement den Circularspline in Tangentialrichtung, ausschließlich kraftschlüssig an einer Außenumfangsfläche des Circularsplines hält und dass die Außenumfangsfläche des Circularsplines eine axiale Länge aufweist, die größer ist als das 0,2-Fache des Teilkreisdurchmessers einer Außenverzahnung des Flexsplines.

Aus DE 10 2015 101 996 A1 ist eine Radbremseinheit mit einem Zuspannelement bekannt, mittels dem eine beweglich gelagerte Bremsbacke mittelbar über ein beweglich gelagertes Übertragungsbauteil verschiebbar ist, wobei sich das Übertragungsbauteil einerseits mit einem ersten Koppelabschnitt an dem Zuspannelement und andererseits mit einem zweiten Koppelabschnitt an der Bremsbacke abstützt und wobei das Übertragungsbauteil wenigstens einen Spindeltrieb aufweist, mittels dem der Abstand des ersten Koppelabschnitts zu dem zweiten Koppelabschnitt veränderbar ist. Die Radbremseinheit weist eine elektromotorische Aktuatorvorrichtung zum Antreiben des Spindeltriebs aufweist. Eine Ausführung beinhaltet ein Spannungswellengetriebe, dessen Circularspline drehfest an einem Gehäuse angeordnet ist.

Aus EP 3 445 543 B1 ist ein motorisiertes Gelenk zum Verbinden von zwei relativ zueinander beweglichen Trägern eines programmierbaren Bewegungsautomaten bekannt, das zwei relativ zueinander bewegliche Gehäuseteile, einen Antriebsmotor und ein dem Antriebsmotor triebtechnisch nachgeschaltetes Getriebe aufweist. Der Antriebsmotor ist in einem der Gehäuseteile angeordnet, während das Getriebe in dem anderen Gehäuseteil angeordnet ist. Alternativ ist es auch möglich, dass ein Teil des Getriebes in einem der Gehäuseteile angeordnet ist und ein anderer Teil des Getriebes in dem anderen Gehäuseteil angeordnet ist. Das motorisierte Gelenk beinhaltet ein Spannungswellengetriebe mit einem innenverzahnten Stützring, der drehfest mit einem Träger des motorisierten Gelenks verbunden ist.

Es ist die Aufgabe der vorliegenden Erfindung, einen Aktuator anzugeben, der einen gegebenen Bauraum besonders gut ausnutzt, um eine hohe Leistungsfähigkeit zu erreichen.

Die Aufgabe wird durch einen Aktuator gelöst, der dadurch gekennzeichnet ist, dass der Aktuator eine Drehmomentabstützkomponente aufweist, die sowohl das Drehmoment des Getriebes als auch das Drehmoment des Antriebsmotors abstützt, wobei die Drehmomentabstützkomponente wenigstens ein Befestigungselement aufweist, das dazu ausgebildet ist, die Drehmomentabstützkomponente schraubenlos an einer Komponente eines übergeordneten Systems, insbesondere an einer Komponente eines programmierbaren Bewegungsautomaten, zu befestigen.

In erfindungsgemäßer Weise wurde erkannt, dass die Befestigung mittels eines Flansches, durch den Befestigungsschrauben verlaufen, nachteiliger Weise besonders viel Bauraum erfordert. Es wurde weiter erkannt, dass der für die Befestigung notwendige Bauraum verringert werden kann, so dass mehr Bauraum für den Antriebsmotor und insbesondere das Getriebe zur Verfügung steht. So ist es erfindungsgemäß insbesondere ermöglicht, das Getriebe, insbesondere radial, zu vergrößern, womit vorteilhaft erreicht werden kann, dass das Getriebe mit höheren Drehmomenten belastet werden kann, ohne dass es zu einer Beschädigung, einer Lebensdauerbeeinflussung oder einem Ausfall des Getriebes kommt. Natürlich ist es alternativ auch möglich, den Aktuator bei gleicher Leistungsfähigkeit, insbesondere radial, zu verkleinern, um Bauraum einzusparen.

Um dies zu erreichen wird auf ein Anschrauben unter Verwendung von flanschartigen Abschnitten und einer Vielzahl von Befestigungsschrauben, wie dies derzeit üblich ist, verzichtet. Stattdessen ist vorzugsweise vielmehr vorgesehen, dass der gesamte funktionsfähig zusammengebaute Aktuator, schraubenlos (damit ist gemeint: ohne separate Befestigungsschrauben) an einer Komponente eines übergeordneten Systems befestigt wird, was beispielsweise dadurch realisiert werden kann, dass er, beispielsweise mittels eines Toleranzrings, eingepresst wird oder ein Gewinde aufweist, so dass er insgesamt in ein Gegenbefestigungselement eines übergeordneten Systems eingeschraubt und beispielsweise mit einer Kontermutter gesichert werden kann. Erfindungsgemäß lässt sich beispielsweise der Außendurchmesser eines Aktuators, der ein Spannungswellengetriebe der Baugröße 51 (der Teilkreisdurchmesser des Circularsplines beträgt 51 mm) beinhaltet, bei gleicher Leistungsfähigkeit von 80 mm auf 60 mm reduzieren.

Bei einer besonders vorteilhaften Ausführung ist das Befestigungselement dazu ausgebildet, mit einem Gegenbefestigungselement eines übergeordneten Systems zusammenzuwirken. Beispielsweise kann das Befestigungselement ein Gewinde aufweisen, während das Gegenbefestigungselement ein entsprechendes Gegengewinde aufweist, so dass der Aktuator, vorzugsweise als fertig montierte und funktionsfähige Baueinheit, in eine Haltekomponente eines übergeordneten Systems, die das Gegengewinde aufweist, eingeschraubt oder auf eine Haltekomponente eines übergeordneten Systems aufgeschraubt werden kann.

Das Gewinde kann beispielsweise als Außengewinde ausgebildet sein. In diesem Fall kann der Aktuator beispielsweise in eine Haltekomponente eines übergeordneten Systems eingeschraubt werden, die eine zylinderförmige Aufnahme mit einem zu dem Außengewinde passenden Innengewinde aufweist.

Das Gewinde kann alternativ als Innengewinde ausgebildet sein. In diesem Fall kann der Aktuator beispielsweise auf einen zylinderförmigen oder rohrförmigen Abschnitt einer Haltekomponente eines übergeordneten Systems aufgeschraubt werden, der ein zu dem Innengewinde passendes Außengewinde aufweist.

Das Befestigungselement kann alternativ als Klemmfläche oder als Klemmbauteil, beispielsweise als Klemmring, ausgebildet sein, so dass es ermöglicht ist, den Aktuator mittels einer Klemmbefestigung an einer Haltekomponente eines übergeordneten Systems zu befestigen. Das Klemmbauteil kann insbesondere einen federelastischen und/oder geschlitzten Ring oder eine federelastische und/oder gewellte und/oder zylinderförmige Hülse oder ein gewelltes und/oder elastisches und/oder zylinderförmig gebogenes Band, insbesondere Blechband, aufweisen oder als federelastischer und/oder geschlitzter Ring oder als federelastische und/oder gewellte und/oder zylinderförmige Hülse oder als gewelltes und/oder elastisches und/oder zylinderförmig gebogenes Band, insbesondere Blechband, ausgebildet sein.

Bei einer besonders sicher befestigbaren Ausführung weist die Drehmomentabstützkomponente ein weiteres Befestigungselement auf. Das weitere Befestigungselement kann als weiteres Gewinde ausgebildet sein. Insbesondere ist es möglich, dass das Befestigungselement ein Gewinde aufweist und dass das weitere Befestigungselement ein weiteres Gewinde aufweist, das eine andere Steigung hat als das Gewinde. Alternativ oder zusätzlich kann vorgesehen sein, dass das Gewinde und das weitere Gewinde einen unterschiedlichen Gewindedurchmesser und/oder ein unterschiedliches Gewindevorzeichen (beispielsweise kann das Gewinde ein Rechtsgewinde sein, während das weitere Gewinde ein Linksgewinde ist oder umgekehrt) aufweisen.

Beispielsweise kann vorteilhaft vorgesehen sein, dass auf das weitere Gewinde eine Mutter aufgeschraubt ist. Die Mutter kann insbesondere als Kontermutter fungieren, um eine ungewollte Drehung der Drehmomentabstützkomponente relativ zu dem übergeordneten System zu verhindern.

Zum Befestigen der Drehmomentabstützkomponente an einer Haltekomponente eines übergeordneten Systems, insbesondere eines Roboters oder Roboterarmes, kann beispielsweise auch vorgesehen sein, dass das Befestigungselement zum Herstellen einer Formschlussverbindung, insbesondere durch einhaken oder einstecken, ausgebildet ist, so dass beispielsweise zunächst eine Formschlussverbindung hergestellt werden kann, die mittels eines Konterschraubelements, beispielsweise einer Kontermutter, verspannt wird, wodurch auch eine gute Kippsteifigkeit erreichbar ist. Hierbei kann die Formschlussverbindung vorzugsweise einfach konzipiert sein, indem sie beispielsweise durch ein einfaches Einhaken oder ein einfaches Durchstecken der mit einem Anschlagbunt versehenen Drehmomentabstützkomponente durch eine Durchgangsöffnung des übergeordneten Systems herstellbar ist.

Zusätzlich kann wenigstens ein Führungselement vorhanden sein, das eine vorbestimmte Relativstellung und/oder Relativausrichtung des Aktuators relativ zu der Roboterkomponente gewährleistet. Das Führungselement kann beispielsweise durch eine Steckverzahnung, insbesondere Sternverzahnung, realisiert sein. Das Führungselement kann insbesondere als Verdrehsicherung fungieren, die eine ungewollte Drehung des Aktuators relativ zu dem übergeordneten System, insbesondere einer Haltekomponente des übergeordneten Systems, verhindert.

Es ist alternativ auch möglich, dass das weitere Befestigungselement als (weitere) Klemmfläche oder als (weiteres) Klemmbauteil, beispielsweise als Klemmring, ausgebildet ist. Hierbei kann vorgesehen sein, dass das Befestigungselement und das weitere Befestigungselement zur klemmenden Befestigung, insbesondere mit einem Klemmbauteil, ausgebildet sind.

Insbesondere ist es auch möglich, dass das Befestigungselement ein Gewinde aufweist, während das weitere Befestigungselement zur klemmenden Befestigung, insbesondere mit einem Klemmbauteil ausgebildet ist. Umgekehrt ist es auch möglich, dass das Befestigungselement zur klemmenden Befestigung, insbesondere mit einem Klemmbauteil, ausgebildet ist, während das weitere Befestigungselement ein Gewinde aufweist.

Die Drehmomentabstützkomponente kann vorteilhaft, insbesondere unmittelbar, drehfest mit einem Stator des Antriebsmotors verbunden sein. Bei einer besonders robusten Ausführung ist die Drehmomentabstützkomponente gemeinsam einstückig mit einem Statorbauteil des Stators hergestellt.

Alternativ oder zusätzlich kann die Drehmomentabstützkomponente drehfest mit einem Getriebebauteil des Getriebes verbunden sein oder gemeinsam einstückig mit einem Getriebebauteil des Getriebes hergestellt sein. Beispielsweise kann vorteilhaft vorgesehen sein, dass das Getriebebauteil ein innenverzahntes Hohlrad, insbesondere ein Circularspline oder ein Dynamicspline eines Spannungswellengetriebes, oder ein Bolzenring eines Zykloidgetriebes, ist.

Hinsichtlich der Ausbildung des Getriebes gibt es keine grundsätzlichen Beschränkungen. Ganz besonders vorteilhaft ist eine Ausführung, bei der das Getriebe als Spannungswellengetriebe ausgebildet ist.

Das Spannungswellengetriebe kann beispielsweise als Topfgetriebe ausgebildet sein. Bei einer solchen Ausführung kann der Flexspline an einem Ende einen radial nach innen gerichteten Boden aufweisen, während das andere Ende des Flexsplines die Flexsplineverzahnung aufweist.

Das Spannungswellengetriebe kann alternativ als Hutgetriebe ausgebildet sein. Bei einer solchen Ausführung kann der Flexspline an einem Ende einen ringförmigen, radial nach außen gerichteten Kragen aufweisen, während das andere Ende des Flexsplines die Flexsplineverzahnung aufweist.

Das Spannungswellengetriebe kann alternativ als Ringgetriebe ausgebildet sein. Bei einer solchen Ausführung kann der Flexspline im Wesentlichen aus einer radialflexiblen Hülse mit einer Flexsplineverzahnung bestehen. Bei einer solchen Ausführung können ein Dynamicspline und ein Circularspline vorhanden sein, die beide jeweils eine mit der Flexsplineverzahnung an mindestens zwei Stellen in Zahneingriff stehende Verzahnung aufweisen.

Alternativ kann das Getriebe beispielsweise auch als Planetengetriebe oder als Zykloidgetriebe ausgebildet sein.

Bei einer ganz besonders vorteilhaften Ausführung ist die Drehmomentabstützkomponente als Gehäuse ausgebildet. Insbesondere kann vorteilhaft vorgesehen sein, dass dieses Gehäuse das Getriebe und/oder den Antriebsmotor wenigstens teilweise, vorzugsweise vollständig, einhaust. Eine solche Ausführung hat den ganz besonderen Vorteil, dass die Drehmomentabstützkomponente eine Doppelfunktion ausübt, so dass eine kompakte Bauweise ermöglicht ist und gleichzeitig das Getriebe und/oder der Antriebsmotor vor Beschädigungsverschmutzung geschützt untergebracht sind.

Die Drehmomentabstützkomponente kann, insbesondere auch wenn sie zusätzlich als Gehäuse fungiert, einteilig oder mehrteilig ausgebildet sein. Insbesondere kann vorteilhaft vorgesehen sein, dass ein Antriebsmotorgehäuse und ein Getriebegehäuse gemeinsam die Drehmomentabstützkomponente bilden oder zumindest Bestandteile der Drehmomentabstützkomponente sind.

Der Aktuator, insbesondere die Drehmomentabstützkomponente des Aktuators, kann vorteilhaft ein Ankoppelelement zum Ankoppeln eines Montagewerkzeuges, insbesondere eines Schraubenschlüssels oder eines Stiftschlüssels, aufweisen. Beispielsweise wenn das Befestigungselement als Gewinde ausgebildet ist, hat seine solche Ausführung den ganz besonderen Vorteil, dass die Drehmomentabstützkomponente mittels des Montagewerkzeugs rotiert werden kann, um den Aktuator in ein übergeordnetes System, insbesondere in eine Haltekomponente eines übergeordneten Systems, einzuschrauben. Außerdem kann die Drehmomentabstützkomponente mittels des Montagewerkzeugs besonders einfach und präzise in ihrer Drehstellung gehalten werden, während eine Kontermutter angezogen wird.

Der gesamte Aktuator kann in ganz besonders vorteilhafter Weise derart ausgebildet sein, dass er als fertig montierte und funktionsfähige Baueinheit an ein mittels des Aktuators anzutreibendes System ankoppelbar ist, wobei eine drehstarre Verbindung der Drehmomentabstützkomponente an einer Komponente eines übergeordneten Systems herstellbar ist, ohne hierfür Teile des Aktuators demontieren zu müssen. Zusätzlich kann hierbei vorteilhaft vorgesehen sein, dass der Aktuator ein Abtriebselement, insbesondere eine Abtriebswelle, aufweist und dass eine drehstarre Verbindung des Abtriebselements mit einem Antriebselement, insbesondere einer Antriebswelle, eines übergeordneten Systems herstellbar ist, ohne hierfür Teile des Aktuators demontieren zu müssen oder ohne hierfür im Kraftfluss vom Antriebsmotor zum Abtriebselement liegende Teile des Aktuators demontieren zu müssen. Dies kann beispielsweise mithilfe einer Befestigungsschraube realisiert werden, die durch den Antriebsmotor und/oder das Getriebe sowie durch das Abtriebselement hindurch verläuft und in das Antriebselement eingeschraubt wird. Alternativ kann dies beispielsweise mithilfe einer Steckverbindung, die das Abtriebselement mit dem Antriebselement verbindet, realisiert werden. Es ist allerdings grundsätzlich auch möglich, das Antriebselement und das Abtriebselement auf andere Weise miteinander zu verbinden.

Ganz besonders vorteilhaft ist ein System, das einen erfindungsgemäßen Aktuator und eine Haltekomponente, an der die Drehmomentabstützkomponente mittels des Befestigungselements befestigt ist, aufweist. Insbesondere kann die Haltekomponente, wie bereits erwähnt, ein Gegenbefestigungselement aufweisen, das mit dem Befestigungselement zusammenwirkt. Wie ebenfalls bereits erwähnt kann das Gegenbefestigungselement als ein Gegengewinde ausgebildet sein, das mit dem Gewinde des Befestigungselements verschraubt ist. Hierbei kann die zwischen dem Gewinde und dem Gegengewinde hergestellte Schraubverbindung vorteilhaft zusätzlich durch eine Schraubsicherung, insbesondere eine formschlüssige und/oder eine stoffschlüssige Schraubsicherung, gesichert sein.

Bei einer ganz besonders vorteilhaften Ausführung sind das Gewinde und das Gegengewinde ungleich lang ausgebildet. Eine solche Ausführung hat den ganz besonderen Vorteil, dass der jeweils überstehende Teil des Gewindes bzw. Gegengewindes zum Aufschrauben eines Konterschraubelements genutzt werden kann. Das Konterschraubelement weist vorzugsweise ein Innengewinde auf, wenn der überstehende Teil des Gewindes bzw. Gegengewindes ein Außengewinde hat. Das Konterschraubelement weist vorzugsweise ein Außengewinde auf, wenn der überstehende Teil des Gewindes bzw. Gegengewindes ein Innengewinde hat.

Das Konterschraubelement kann beispielsweise als Kontermutter oder als Gewindestift oder als eine mit einem Außengewinde versehene Hülse ausgebildet sein.

Beispielsweise kann vorteilhaft vorgesehen sein, dass das Gewinde länger ausgebildet ist als das Gegengewinde und dass ein Konterschraubelement auf einen über das Gegengewinde hervorstehenden Teil des Gewindes aufgeschraubt ist. Alternativ ist es möglich, dass das Gegengewinde länger ausgebildet ist als das Gewinde und dass ein Konterschraubelement auf einen über das Gewinde hervorstehenden Teil des Gegengewindes aufgeschraubt ist.

Bei einer ganz besonders vorteilhaften Ausführung sind das Gewinde des Befestigungselements und das Gegengewinde der Halterkomponente derart ausgebildet und wirken derart zusammen, dass das Drehmoment, das die Drehmomentabstützkomponente abstützt, die Schraubverbindung des Gewindes und des Gegengewindes festzieht. Eine solche Ausführung hat den ganz besonderen Vorteil, dass der Aktuator besonders sicher in der Haltekomponente des übergeordneten Systems gehalten ist, wobei sichergestellt ist, dass sich die Schraubverbindung zwischen dem Gewinde und dem Gegengewinde nicht ungewollt löst.

Bei einer vorteilhaften Ausführung ist ein Axialanschlag vorhanden, der die Axialposition des Aktuators, insbesondere der Drehmomentabstützkomponente des Aktuators, relativ zu der Haltekomponente definiert. Der Axialanschlag kann beispielsweise an der Drehmomentabstützkomponente angeordnet sein oder gemeinsam einstückig mit der Drehmomentabstützkomponente hergestellt sein. Alternativ kann auch vorgesehen sein, dass der Axialanschlag an der Haltekomponente angeordnet ist oder gemeinsam einstückig mit der Haltekomponente hergestellt ist. Beispielsweise kann vorteilhaft vorgesehen sein, dass die Drehmomentabstützkomponente, die ein Befestigungselement mit einem Gewinde aufweist, so weit in eine mit einem Gegengewinde versehene Aufnahme einer Haltekomponente des übergeordneten Systems eingeschraubt wird, bis sie oder ein anderes Bauteil des Aktuators an dem Axialanschlag anschlägt.

Bei einer ganz besonders präzisen Ausführung ist ein Zentrierbund vorhanden, der die Radialposition des Aktuators, insbesondere der Drehmomentabstützkomponente des Aktuators, relativ zu der Haltekomponente definiert.

Das erfindungsgemäße System kann beispielsweise ein motorisiertes Gelenk, insbesondere ein motorisiertes Gelenk zum Verbinden von zwei relativ zueinander beweglichen Trägern eines, insbesondere programmierbaren, Bewegungsautomaten, sein.

Das erfindungsgemäße System kann beispielsweise als ein, insbesondere programmierbarer, Bewegungsautomat ausgebildet sein.

Alternativ kann das erfindungsgemäße System beispielsweise auch als Fahrzeug oder als Fahrzeugkomponente, beispielsweise als Lenkung, insbesondere Servolenkung oder Überlagerungslenkung, oder als Fahrwerk, insbesondere aktives Fahrwerk, ausgebildet sein.

Hinsichtlich der Ausführung des erfindungsgemäßen Systems gibt es jedoch keine grundsätzlichen Beschränkungen.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: eine Detailansicht eines ersten Ausführungsbeispiels eines erfindungsgemäßen Systems,
- Fig. 2: eine Detailansicht eines zweiten Ausführungsbeispiels eines erfindungsgemäßen Systems,
- Fig.3: eine Detailansicht eines dritten Ausführungsbeispiels eines erfindungsgemäßen Systems,
- Fig.4: eine Detailansicht eines vierten Ausführungsbeispiels eines erfindungsgemäßen Systems,
- Fig. 5: eine Detailansicht eines fünften Ausführungsbeispiels eines erfindungsgemäßen Systems,
- Fig. 6: eine Detailansicht eines sechsten Ausführungsbeispiels eines erfindungsgemäßen Systems,
- Fig. 7: eine Detailansicht eines siebten Ausführungsbeispiels eines erfindungsgemäßen Systems,
- Fig.8: eine Detailansicht eines achten Ausführungsbeispiels eines erfindungsgemäßen Systems, das als motorisiertes Gelenk eines Roboterarms ausgebildet ist.

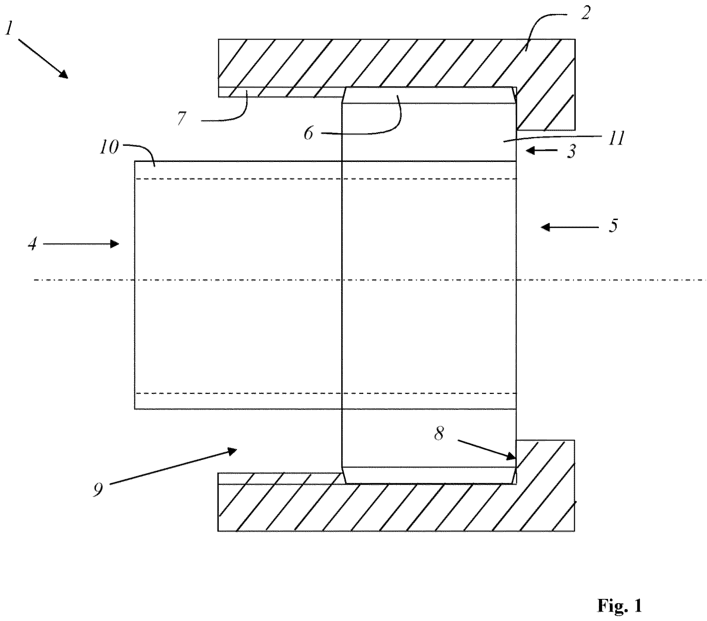

Figur 1 zeigt eine Detailansicht eines ersten Ausführungsbeispiels eines erfindungsgemäßen Systems, das einen erfindungsgemäßen Aktuator 1 und eine Haltekomponente 2, an der eine Drehmomentabstützkomponente 3 des Aktuators 1 befestigt ist, aufweist.

Der Aktuator 1 weist einen Antriebsmotor 4 und ein dem Antriebsmotor 4 triebtechnisch nachgeschaltetes Getriebe 5 auf.

Der Aktuator 1 weist außerdem die Drehmomentabstützkomponente 3 auf, die sowohl das Drehmoment des Getriebes 5 als auch das Drehmoment des Antriebsmotors 4 abstützt. Die Drehmomentabstützkomponente 3 weist ein als Außengewinde ausgebildetes Befestigungselement 6 auf, das dazu ausgebildet ist, die Drehmomentabstützkomponente 3 schraubenlos an der Haltekomponente 2 zu befestigen, die ein als Gegengewinde 7, hier als Innengewinde, ausgebildetes Gegenbefestigungselement aufweist.

Es ist ein Axialanschlag 8 vorhanden, der die Axialposition des Aktuators 1 relativ zu der Haltekomponente 2 definiert. Der Axialanschlag 8 ist an der Haltekomponente 2 angeordnet und kann gemeinsam einstückig mit der Haltekomponente 2 hergestellt sein. Beim Zusammenbauen wird die Drehmomentabstützkomponente 3 so weit in die mit dem Gegengewinde 7 versehene Aufnahme 9 der Haltekomponente 2 eingeschraubt, bis sie an dem Axialanschlag 8 anschlägt.

Die Drehmomentabstützkomponente 3 ist mehrteilig ausgebildet und aus einem Antriebsmotorgehäuse 10 und einem Getriebebauteil 11 zusammengesetzt. Allerdings sind hinsichtlich der Drehmomentabstützkomponente 3 auch andere auf Ausführungen, insbesondere auch eine einteilige Ausführung möglich.

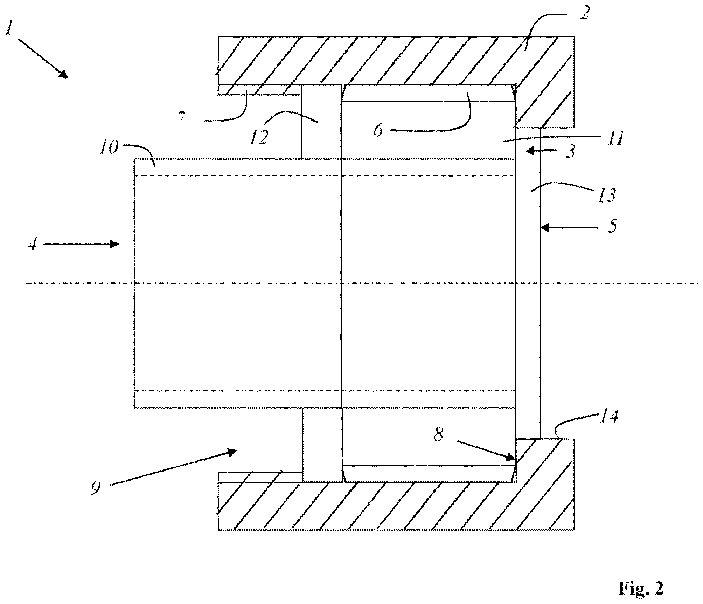

Figur 2 zeigt eine Detailansicht eines zweiten Ausführungsbeispiels eines erfindungsgemäßen Systems, das ähnlich aufgebaut ist, wie das in Figur 1 dargestellte Ausführungsbeispiel.

Dass Gewinde 6 ist kürzer das Gegengewinde 7. Das System gemäß dem zweiten Ausführungsbeispiel weist ein Konterschraubelement 12 mit einem Außengewinde auf, das in den überstehenden Teil des Gegengewindes 7 ein geschraubt ist, um ein ungewolltes Lösen des Aktuators 1 zu verhindern.

Außerdem ist ein Zentrierbund 13 vorhanden, der in eine Zentrieröffnung 14 des Haltekomponente 2 eingreift und die Radialposition des Aktuators 1 relativ zu der Haltekomponente 2 präzise definiert.

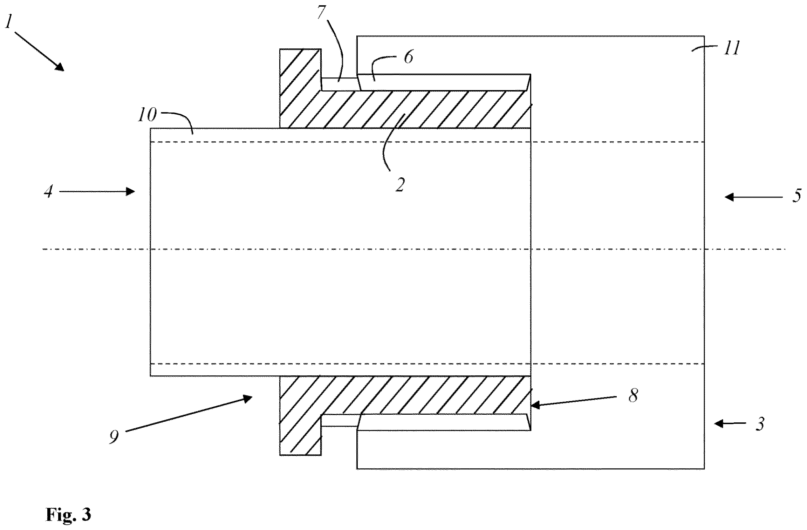

Figur 3 zeigt eine Detailansicht eines dritten Ausführungsbeispiels eines erfindungsgemäßen Systems, das einen erfindungsgemäßen Aktuator 1 und eine Haltekomponente 2, an der eine Drehmomentabstützkomponente 3 des Aktuators 1 befestigt ist.

Der Aktuator 1 weist einen Antriebsmotor 4 und ein dem Antriebsmotor 4 triebtechnisch nachgeschaltetes Getriebe 5 auf.

Der Aktuator 1 weist außerdem die Drehmomentabstützkomponente 3 auf, die sowohl das Drehmoment des Getriebes 5 als auch das Drehmoment des Antriebsmotors 4 abstützt. Die Drehmomentabstützkomponente 3 weist ein als Innengewinde ausgebildetes Befestigungselement 6 auf, das dazu ausgebildet ist, die Drehmomentabstützkomponente 3 schraubenlos an der Haltekomponente 2 zu befestigen, die ein als Gegengewinde 7, hier als Außengewinde, ausgebildetes Gegenbefestigungselement aufweist.

Es ist ein Axialanschlag 8 vorhanden, der die Axialposition des Aktuators 1 relativ zu der Haltekomponente 2 definiert. Der Axialanschlag 8 ist an der Drehmomentabstützkomponente 3 angeordnet. Beim Zusammenbauen wird die Drehmomentabstützkomponente 3 so weit auf die mit dem Gegengewinde 7 versehene Haltekomponente 2 aufgeschraubt, bis die Haltekomponente 2 an dem Axialanschlag 8 anschlägt.

Die Drehmomentabstützkomponente 3 kann mehrteilig ausgebildet sein und aus einem Antriebsmotorgehäuse 10 und einem Getriebebauteil 11 zusammengesetzt sein. Allerdings sind hinsichtlich der Drehmomentabstützkomponente auch andere Ausführungen, insbesondere auch eine einteilige Ausführung, möglich.

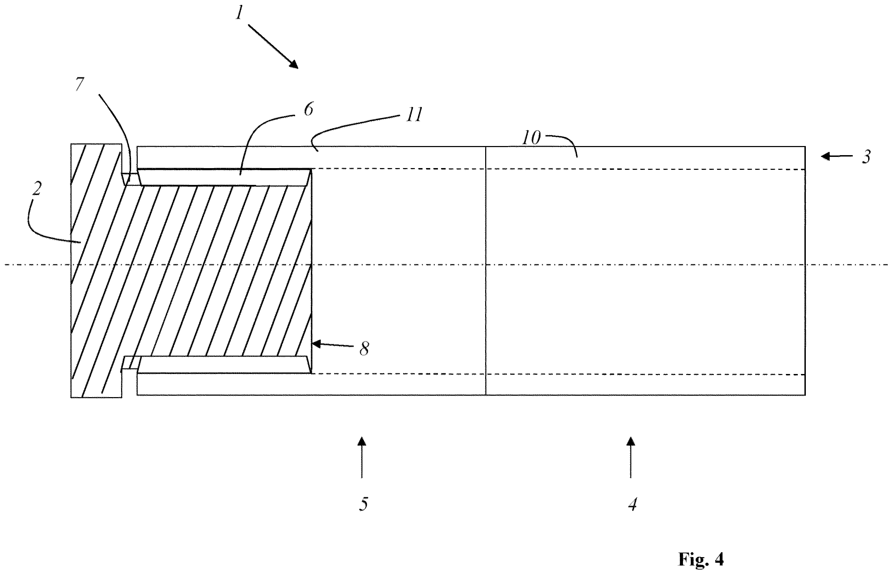

Figur 4 zeigt eine Detailansicht eines vierten Ausführungsbeispiels eines erfindungsgemäßen Systems, das einen erfindungsgemäßen Aktuator 1 und eine Haltekomponente 2, an der eine Drehmomentabstützkomponente 3 des Aktuators 1 befestigt ist, aufweist.

Der Aktuator 1 weist einen Antriebsmotor 4 und ein dem Antriebsmotor 4 triebtechnisch nachgeschaltetes Getriebe 5 auf, wobei der Antriebsmotor 4 und das Getriebe 5 radial gleich groß ausgebildet sind.

Der Aktuator 1 weist außerdem die Drehmomentabstützkomponente 3 auf, die sowohl das Drehmoment des Getriebes 5 als auch das Drehmoment des Antriebsmotors 4 abstützt. Die Drehmomentabstützkomponente 3 weist ein als Innengewinde ausgebildetes Befestigungselement 6 auf, das dazu ausgebildet ist, die Drehmomentabstützkomponente 3 schraubenlos an der Haltekomponente 2 zu befestigen, die ein als Gegengewinde 7, hier als Außengewinde, ausgebildetes Gegenbefestigungselement aufweist.

Es ist ein Axialanschlag 8 vorhanden, der die Axialposition des Aktuators 1 relativ zu der Haltekomponente 2 definiert. Der Axialanschlag 8 ist an der Drehmomentabstützkomponente 3 angeordnet. Beim Zusammenbauen wird die Drehmomentabstützkomponente 3 so weit auf die mit dem Gegengewinde 7 versehene Haltekomponente 2 aufgeschraubt, bis die Haltekomponente 2 an dem Axialanschlag 8 anschlägt.

Die Drehmomentabstützkomponente 3 kann mehrteilig ausgebildet sein und aus einem Antriebsmotorgehäuse 10 und einem Getriebebauteil 11 zusammengesetzt sein. Allerdings sind hinsichtlich der Drehmomentabstützkomponente auch andere Ausführungen, insbesondere auch eine einteilige Ausführung, möglich.

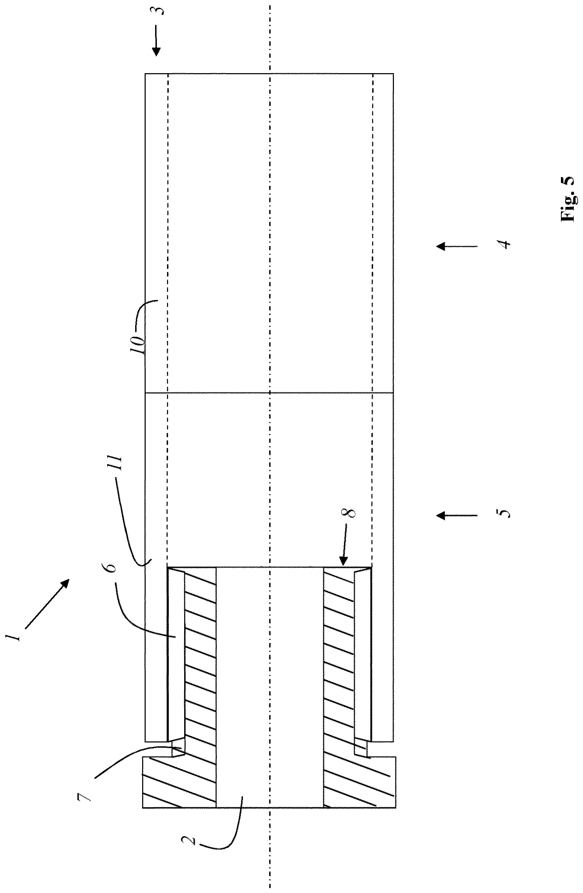

Figur 5 zeigt eine Detailansicht eines fünften Ausführungsbeispiels eines erfindungsgemäßen Systems, das ähnlich aufgebaut ist, wie das in Figur 4 dargestellte vierte Ausführungsbeispiel.

Bei dem fünften Ausführungsbeispiels ist die Haltekomponente 2 als Hülse ausgebildet, durch die eine (nicht dargestellte) Welle, insbesondere eine von dem Aktuator angetriebene Abtriebswelle, verlaufen kann.

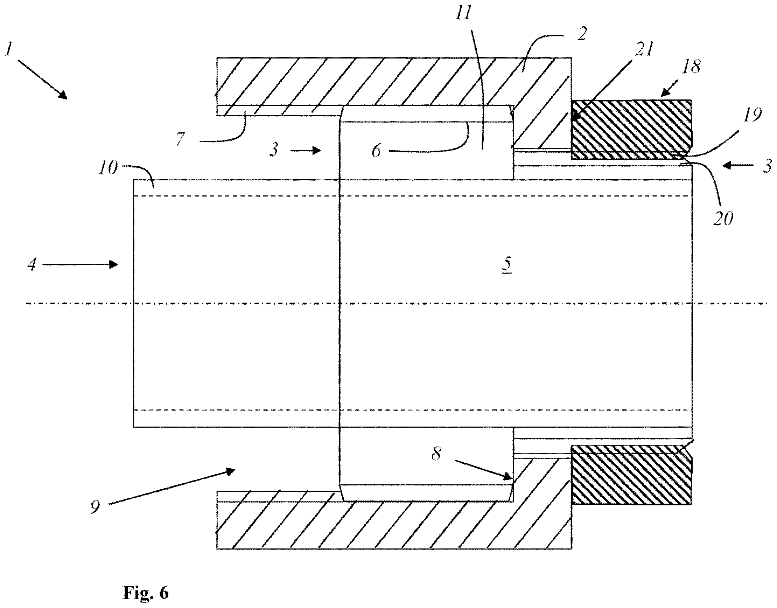

Figur 6 zeigt eine Detailansicht eines sechsten Ausführungsbeispiels eines erfindungsgemäßen Systems, das einen erfindungsgemäßen Aktuator 1 und eine Haltekomponente 2, an der eine Drehmomentabstützkomponente 3 des Aktuators 1 befestigt ist, aufweist.

Der Aktuator 1 weist einen Antriebsmotor 4 und ein dem Antriebsmotor 4 triebtechnisch nachgeschaltetes Getriebe 5 auf.

Der Aktuator 1 weist außerdem die Drehmomentabstützkomponente 3 auf, die sowohl das Drehmoment des Getriebes 5 als auch das Drehmoment des Antriebsmotors 4 abstützt. Die Drehmomentabstützkomponente 3 weist ein als Außengewinde ausgebildetes Befestigungselement 6 auf, das dazu ausgebildet ist, die Drehmomentabstützkomponente 3 schraubenlos an der Haltekomponente 2 zu befestigen, die ein als Gegengewinde 7, hier als Innengewinde, ausgebildetes Gegenbefestigungselement aufweist.

Es ist ein Axialanschlag 8 vorhanden, der die Axialposition des Aktuators 1 relativ zu der Haltekomponente 2 definiert. Der Axialanschlag 8 ist an der Haltekomponente 2 angeordnet und kann gemeinsam einstückig mit der Drehmomentabstützkomponente 3 hergestellt sein. Beim Zusammenbauen wird die Drehmomentabstützkomponente 3 so weit in die mit dem Gegengewinde 7 versehene Aufnahme 9 der Haltekomponente 2 eingeschraubt, bis sie an dem Axialanschlag 8 anschlägt.

Die Drehmomentabstützkomponente 3 ist mehrteilig ausgebildet und aus einem Antriebsmotorgehäuse 10 und einem Getriebebauteil 11 zusammengesetzt. Allerdings sind hinsichtlich der Drehmomentabstützkomponente 3 auch andere Ausführungen, insbesondere auch eine einteilige Ausführung, möglich.

Bei dieser Ausführung weist die Drehmomentabstützkomponente 3 ein weiteres Befestigungselement auf. Das weitere Befestigungselement ist als weiteres Gewinde 20 ausgebildet. Das weitere Gewinde 20 ist als Außengewinde ausgebildet. Auf das weitere Gewinde 20 ist ein Schraubelement 18 mit einem Innengewinde 19 aufgeschraubt und gegen einen weiteren Axialanschlag 21 der Haltekomponente 2 verspannt.

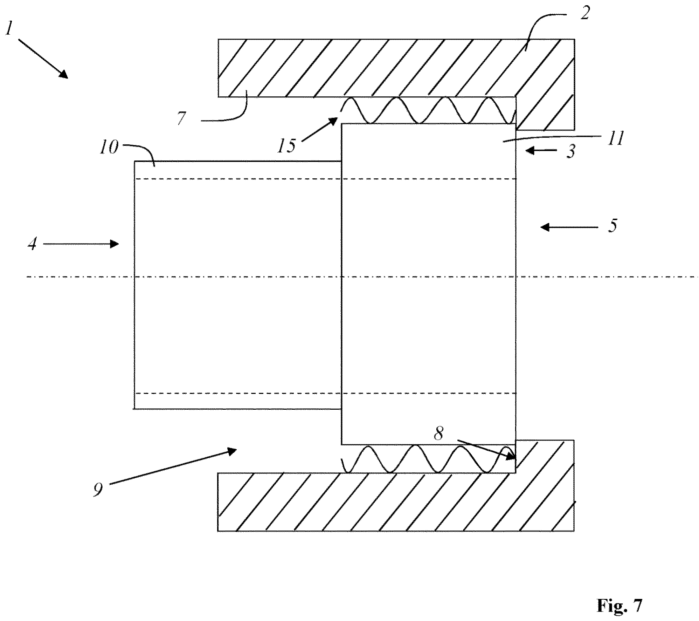

Figur 7 zeigt eine Detailansicht eines siebten Ausführungsbeispiels eines erfindungsgemäßen Systems, das einen erfindungsgemäßen Aktuator 1 und eine Haltekomponente 2, an der eine Drehmomentabstützkomponente 3 des Aktuators 1 befestigt ist.

Der Aktuator 1 weist einen Antriebsmotor 4 und ein dem Antriebsmotor 4 triebtechnisch nachgeschaltetes Getriebe 5 auf.

Der Aktuator 1 weist außerdem die Drehmomentabstützkomponente 3 auf, die sowohl das Drehmoment des Getriebes 5 als auch das Drehmoment des Antriebsmotors 4 abstützt. Die Drehmomentabstützkomponente 3 weist ein als Klemmbauteil 15 ausgebildetes Befestigungselement 6 auf, das dazu ausgebildet ist, die Drehmomentabstützkomponente 3 schraubenlos an der Haltekomponente 2 zu befestigen. Das Klemmbauteil 15 kann als federelastische und/oder gewellte und/oder zylinderförmige Hülse oder als gewelltes und/oder elastisches und/oder zylinderförmig gebogenes Band, insbesondere Blechband, ausgebildet sein.

Es ist ein Axialanschlag 8 vorhanden, der die Axialposition des Aktuators 1 relativ zu der Haltekomponente 2 definiert. Der Axialanschlag 8 ist an der Haltekomponente 2 angeordnet und kann gemeinsam einstückig mit der Drehmomentabstützkomponente 3 hergestellt sein. Beim Zusammenbauen wird die Drehmomentabstützkomponente 3 so weit in die mit dem Gegengewinde 7 versehene Aufnahme 9 der Haltekomponente 2 eingepresst, bis sie an dem Axialanschlag 8 anschlägt.

Die Drehmomentabstützkomponente 3 kann mehrteilig ausgebildet und aus einem Antriebsmotorgehäuse 10 und einem Getriebebauteil 11 zusammengesetzt sein. Allerdings sind hinsichtlich der Drehmomentabstützkomponente 3 auch andere auf Ausführungen, insbesondere auch eine einteilige Ausführung möglich.

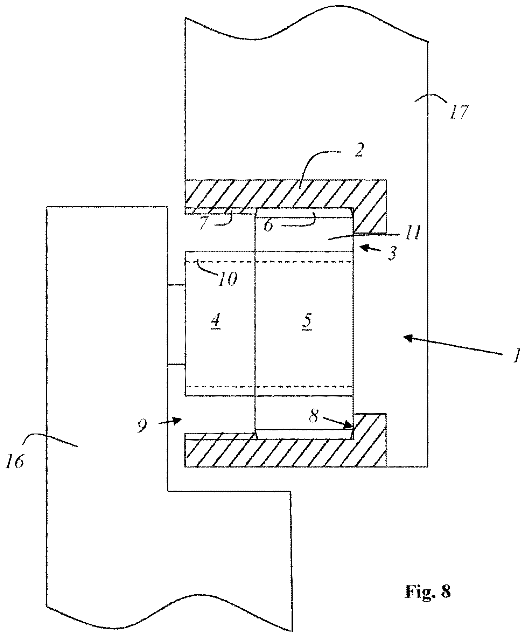

Figur 8 zeigt eine Detailansicht eines achten Ausführungsbeispiels eines erfindungsgemäßen Systems, das als motorisiertes Gelenk eines Roboterarms ausgebildet ist.

Der Aktuator 1 und die Haltekomponente 2 sind wie bei dem ersten Ausführungsbeispiel ausgebildet. Der (nicht im Detail dargestellte) Stator des Antriebsmotors 4 ist mit einem ersten Träger 16 des Roboterarms drehfest verbunden, während die Haltekomponente 2 drehfest mit einem zweiten Träger 17 des Roboterarms drehfest verbunden ist.

Mittels des Aktuators 1 können der erste Träger 16 und der zweite Träger 17 relativ zueinander bewegt werden.

### Bezugszeichenliste:

- 1: Aktuator
- 2: Haltekomponente
- 3: Drehmomentabstützkomponente
- 4: Antriebsmotor
- 5: Getriebe
- 6: Gewinde
- 7: Gegengewinde
- 8: Axialanschlag
- 9: Aufnahme
- 10: Antriebsmotorgehäuse
- 11: Getriebebauteil
- 12: Konterschraubelement
- 13: Zentrierbund
- 14: Zentrieröffnung
- 15: Klemmbauteil
- 16: Erster Träger
- 17: Zweiter Träger
- 18: Schraubelement
- 19: Weiteres Gewinde
- 20: Außengewinde
- 21: Weiterer Axialanschlag

## Patentansprüche

1. Aktuator (1), der einen Antriebsmotor (4) und ein dem Antriebsmotor (4) triebtechnisch nachgeschaltetes Getriebe (5) aufweist, wobei der Aktuator (1) eine Drehmomentabstützkomponente (3) aufweist, die sowohl das Drehmoment des Getriebes (5) als auch das Drehmoment des Antriebsmotors (4) abstützt, und wobei die Drehmomentabstützkomponente (3) wenigstens ein Befestigungselement aufweist, das dazu ausgebildet ist, die Drehmomentabstützkomponente (3) schraubenlos an einer Komponente eines übergeordneten Systems, insbesondere an einer Roboterkomponente, zu befestigen, **dadurch gekennzeichnet, dass** das Befestigungselement ein Gewinde (6) aufweist.

2. Aktuator (1) nach Anspruch 1, **dadurch gekennzeichnet, dass** das Befestigungselement dazu ausgebildet ist, mit einem Gegenbefestigungselement eines übergeordneten Systems zusammenzuwirken.

3. Aktuator (1) nach Anspruch 1 oder2, **dadurch gekennzeichnet, dass** die Drehmomentabstützkomponente (3) ein weiteres Befestigungselement aufweist.

4. Aktuator (1) nach Anspruch 3, **dadurch gekennzeichnet, dass** der Aktuator wenigstens eines der nachfolgenden Merkmale a bis c aufweist:
a. das weitere Befestigungselement weist ein weiteres Gewinde (19) auf,
b. das weitere Befestigungselement weist ein weiteres Gewinde (19) auf, wobei auf das weitere Gewinde (19) ein Schraubelement (18), insbesondere eine Mutter, aufgeschraubt ist,
c. das weitere Befestigungselement weist ein weiteres Gewinde (19) auf, wobei das Gewinde (6) und das weitere Gewinde (19) einen unterschiedlichen Gewindedurchmesser und/oder unterschiedliche Steigung und/oder ein unterschiedliches Steigungsvorzeichen aufweisen.

5. Aktuator (1) nach einem der Ansprüche 1 bis 4, **dadurch gekennzeichnet, dass** der Aktuator wenigstens eines der nachfolgenden Merkmale a bis c aufweist:
a. die Drehmomentabstützkomponente (3) ist drehfest mit einem Stator des Antriebsmotors (4) verbunden oder gemeinsam einstückig mit einem Statorbauteil des Stators hergestellt,
b. die Drehmomentabstützkomponente (3) ist drehfest mit einem Getriebebauteil des Getriebes (5) verbunden oder gemeinsam einstückig mit einem Getriebebauteil des Getriebes (5) hergestellt,
c. das Getriebebauteil ist ein innenverzahntes Hohlrad, insbesondere ein Circularspline oder ein Dynamicspline eines Spannungswellengetriebes, oder ein Bolzenring eines Zykloidgetriebes.

6. Aktuator (1) nach einem der Ansprüche 1 bis 5, **dadurch gekennzeichnet, dass** der Aktuator wenigstens eines der nachfolgenden Merkmale a bis c aufweist:
a. die Drehmomentabstützkomponente (3) ist als Gehäuse ausgebildet,
b. die Drehmomentabstützkomponente (3) ist als Gehäuse ausgebildet, das das Getriebe (5) wenigstens teilweise, vorzugsweise vollständig, einhaust,
c. die Drehmomentabstützkomponente (3) ist als Gehäuse ausgebildet, das den Antriebsmotor (4) wenigstens teilweise, vorzugsweise vollständig, einhaust.

7. Aktuator (1) nach einem der Ansprüche 1 bis 6, **dadurch gekennzeichnet, dass** der Aktuator (1), insbesondere die Drehmomentabstützkomponente (3), ein Ankoppelelement zum Ankoppeln eines Montagewerkzeuges, insbesondere eines Schraubenschlüssels oder eines Stiftschlüssels, aufweist.

8. Aktuator (1) nach einem der Ansprüche 1 bis 7, **dadurch gekennzeichnet, dass**
a. der gesamte Aktuator (1) als fertig montierte und funktionsfähige Baueinheit an ein mittels des Aktuators (1) anzutreibendes System ankoppelbar ist, wobei eine drehstarre Verbindung der Drehmomentabstützkomponente (3) an einer Komponente eines übergeordneten Systems herstellbar ist, ohne hierfür Teile des Aktuators (1) demontieren zu müssen, und/oder dass
b. der Aktuator (1) ein Abtriebselement, insbesondere eine Abtriebswelle, aufweist und dass eine drehstarre Verbindung des Abtriebselements mit einem Antriebselement, insbesondere einer Antriebswelle, eines übergeordneten Systems herstellbar ist, ohne hierfür Teile des Aktuators (1) demontieren zu müssen oder ohne hierfür im Kraftfluss vom Antriebsmotor (4) zum Abtriebselement liegende Teile des Aktuators (1) demontieren zu müssen.

9. System, das einen Aktuator (1) nach einem der Ansprüche 1 bis 8 und eine Haltekomponente (2), an der die Drehmomentabstützkomponente (3) mittels des Befestigungselements befestigt ist, aufweist.

10. System nach Anspruch 9, **dadurch gekennzeichnet, dass** die Haltekomponente (2) ein Gegenbefestigungselement aufweist, das mit dem Befestigungselement zusammenwirkt.

11. System nach Anspruch 10 **dadurch gekennzeichnet, dass** das System wenigstens eines der nachfolgenden Merkmale a bis f aufweist:
a. das Gegenbefestigungselement ist als ein Gegengewinde (7) ausgebildet, das mit dem Gewinde (6) verschraubt ist,
b. es ist eine Schraubsicherung, insbesondere eine formschlüssige und/oder eine stoffschlüssige Schraubsicherung, vorhanden,
c. das Gegenbefestigungselement ist als ein Gegengewinde (7) ausgebildet, wobei das Gewinde (6) und das Gegengewinde (7) ungleich lang ausgebildet sind,
d. das Gegenbefestigungselement ist als ein Gegengewinde (7) ausgebildet, wobei das Gewinde (6) länger ausgebildet ist als das Gegengewinde (7) und dass ein Konterschraubelement auf einen über das Gegengewinde (7) hervorstehenden Teil des Gewindes (6) aufgeschraubt ist,
e. Gegenbefestigungselement ist als ein Gegengewinde (7) ausgebildet, wobei das Gegengewinde (7) länger ausgebildet ist als das Gewinde (6) und dass ein Konterschraubelement auf einen über das Gewinde (6) hervorstehenden Teil des Gegengewindes (7) aufgeschraubt ist,
f. Gegenbefestigungselement ist als ein Gegengewinde (7) ausgebildet, wobei das Gewinde (6) und das Gegengewinde (7) derart ausgebildet sind und derart zusammenwirken, dass das Drehmoment, das die Drehmomentabstützkomponente (3) abstützt, die Schraubverbindung des Gewindes (6) und des Gegengewindes (7) festzieht.

12. System nach einem der Ansprüche 9 bis 11, **dadurch gekennzeichnet, dass** ein Axialanschlag (8) vorhanden ist, der die Axialposition des Aktuators (1), insbesondere der Drehmomentabstützkomponente (3) des Aktuators (1), relativ zu der Haltekomponente (2) definiert.

13. System nach Anspruch 12, **dadurch gekennzeichnet, dass** a. der Axialanschlag (8) an der Drehmomentabstützkomponente (3) angeordnet ist oder gemeinsam einstückig mit der Drehmomentabstützkomponente (3) hergestellt ist, oder dass b. der Axialanschlag (8) an der Haltekomponente (2) angeordnet ist oder gemeinsam einstückig mit der Haltekomponente (2) hergestellt ist.

14. System nach einem der Ansprüche 9 bis 13, **dadurch gekennzeichnet, dass** ein Zentrierbund (13) vorhanden ist, der die Radialposition des Aktuators (1), insbesondere der Drehmomentabstützkomponente (3) des Aktuators (1), relativ zu der Haltekomponente (2) definiert.

15. System nach einem der Ansprüche 8 bis 14, **dadurch gekennzeichnet, dass**
a. das System ein motorisiertes Gelenk, insbesondere ein motorisiertes Gelenk zum Verbinden von zwei relativ zueinander beweglichen Trägern eines, insbesondere programmierbaren, Bewegungsautomaten, ist, oder dass
b. das System als ein, insbesondere programmierbarer, Bewegungsautomat ausgebildet ist. oder dass
c. das System als Fahrzeug oder als Fahrzeugkomponente, beispielsweise als Lenkung, insbesondere Servolenkung oder Überlagerungslenkung, oder als Fahrwerk, insbesondere aktives Fahrwerk, ausgebildet ist.
